**Europäisches Patentamt**

**European Patent Office**

**Office européen des brevets**

(19)

(11) Veröffentlichungsnummer : **0 184 648**
**B1**

(12)

# EUROPÄISCHE PATENTSCHRIFT

(45) Veröffentlichungstag der Patentschrift :
30.11.88

(21) Anmeldenummer : 85113489.0

(22) Anmeldetag : 24.10.85

(51) Int. Cl.⁴ : **H 01 M 2/12, H 01 M 2/02**

(54) Explosionsgeschütztes, dicht verschlossenes galvanisches Element.

(30) Priorität : 29.11.84 DE 3443453

(43) Veröffentlichungstag der Anmeldung :
18.06.86 Patentblatt 86/25

(45) Bekanntmachung des Hinweises auf die Patenterteilung : 30.11.88 Patentblatt 88/48

(84) Benannte Vertragsstaaten :
BE CH DE FR GB IT LI SE

(56) Entgegenhaltungen :
DE-A- 3 034 600
FR-A- 2 517 890
GB-A- 2 129 604
US-A- 3 285 784

(73) Patentinhaber : VARTA Batterie Aktiengesellschaft
Am Leineufer 51
D-3000 Hannover 21 (DE)

(72) Erfinder : Spahrbier, Dieter, Dr. Dipl.-Phys.
Taunusblick 9
D-6233 Kelkheim-Fischbach (DE)

(74) Vertreter : Kaiser, Dieter Ralf, Dipl.-Ing.
Gundelhardtstrasse 72
D-6233 Kelkheim/Ts. (DE)

## Beschreibung

Die Erfindung betrifft ein galvanisches Element mit einem dicht verschlossenen zylindrischen Metallgehäuse, welches gegen die Gefahr einer Explosion abgesichert ist, bestehend aus einem ersten einseitig geschlossenen Zylinder und einem zweiten einseitig geschlossenen Zylinder, welche mit einer Überlappung des ersten Zylinders durch den zweiten und unter Zwischenlage einer elektrischen Isolierung aus Kunststoff derart ineinandergeschoben sind, daß sie nur durch einen hohen Innendruck voneinander abschiebbar sind, wobei die Wandung des ersten Zylinders im Überlappungsbereich mehrere Ventillöcher aufweist.

Die Erfindung ist anwendbar auf elektrochemische Primärzellen wie auf Akkumulatorenzellen, sofern sie flüssige Elektrolyte enthalten und daher zumindest flüssigkeitsdicht verschlossen sind.

Jede lecksichere Gehäuseabdichtung birgt im allgemeinen das Risiko einer gewaltsamen Zerstörung der elektrischen Zelle in sich, wenn diese unvorschriftsmäßig benutzt oder extremen Beanspruchungen wie zu starkes Laden, Überhitzen usw. ausgesetzt wird. Als deren Folge wird stets ein abnormer innerer Gas- oder Dampfdruck aufgebaut, der sich schließlich durch Sprengen des Zellgehäuses Luft schafft.

Vielen bekannten Maßnahmen, die einer Explosion vorbeugen sollen, liegen deshalb druckempfindliche Vorrichtungen zugrunde. Z. B. ist gemäß DE-A 3 206 607 über dem Deckel einer hermetisch geschlossenen Batterie eine zugespitzte Schraube montiert, die den Deckel punktiert, wenn er sich infolge eines Innendrucks in der Batterie ausbeult, so daß deren Inhalt hinausgepreßt wird.

Der GB-A 1.336.567 ist ein Entlastungsventil für eine alkalische Zelle entnehmbar, bei welchem eine stark verformte Kugel aus einem Elastomer im Preßsitz einen Gaskanal ausfüllt, aus dem sie nur durch extrem hohen Druck ausgestoßen werden kann. Sie nimmt darauf über der Kanalmündung eine neue Dichtposition, jedoch bei geringerem Verformungsgrad, ein, die zumindest eine Entspannung des Überdrucks durch eine Entlüftungsöffnung erlaubt.

Bei einer aus der DE-C 2 620 466 bekannten Entgasungsvorrichtung besteht der Verschluß aus einem heißsiegelfähigen Werkstoff, der die in ein Wandteil eingelassene Entgasungsöffnung ausfüllt und darüber hinaus an der muldenförmig vertieften Innenfläche des Wandteils haftet. Ist ein entsprechend hoher Ansprechdruck erreicht, fließt der Werkstoff durch die Entgasungsöffnung in dem Wandteil heraus, und der Überdruck kann aus dem Batterieinnern nach draußen entweichen.

Nach anderen bekannten Konstruktionen, z. B. gemäß GB-A 1.445.043, werden die Zellengehäuse zur Berstsicherheit mit einer Sollbruchstelle versehen.

Während Zellexplosionen unter üblichen Betriebsbedingungen außerordentlich selten auftreten, muß jedoch auch der Fall berücksichtigt werden, daß Zellen beispielsweise mutwillig oder fahrlässig in ein offenes Feuer geworfen werden oder daß Primärelemente unzulässig geladen werden. In einem solchen Fall wird ein brisantes Bersten der Zelle durch eine Gehäusekonstruktion z. B. gemäß US-A 3 285 784 verhindert, bei der Deckel und Becher einer Ni/Cd-Knopfzelle mit Unterstützung von Ventillöchern in der Becherwand, die in zunehmendem Umfang freigelegt werden, bei hohem Innendruck gegen den Widerstand einer nur leichten Verbördelung voneinander abheben können.

Ein galvanisches Element der eingangs beschriebenen Gattung ist der DE-A 3 034 600 zu entnehmen. Von diesem Stand der Technik ausgehend liegt der Erfindung die Aufgabe zugrunde, für derartige galvanische Elemente eine Verschlußanordnung anzugeben, die bei minimalem konstruktiven Aufwand eine drohende Sprengung der Zelle durch überhöhten Innendruck zuverlässig verhindert.

Die Aufgabe wird erfindungsgemäß durch die im kennzeichnenden Teil des Anspruchs 1 angegebenen Maßnahmen gelöst.

Für den funktionsgerechten Zusammenbau einer erfindungsgemäßen Zelle bedarf es der Kenntnis des kritischen Verhaltens des jeweils zugrundeliegenden elektrochemischen Systems unter angenommenen Höchstbelastungen (Elektrolytdampfdruck in Abhängigkeit von der Temperatur, Gasdruck bei mehrfacher Erhöhung der gewöhnlichen Laderate), die bei Einschließung der aktiven Substanzen in ein nicht expandierbares Gehäuse noch keine Explosion auslösen. Solche Grenzwerte lassen sich experimentell leicht ermitteln. Das Zusammenfügen der erfindungsgemäßen Zylinderhülsen geschieht dann unter einem entsprechenden Preßdruck, mit dem am Ende des Preßvorganges ein bestimmter Überlappungsgrad der Zylinder korrespondiert. In den Überlappungsgrad geht auch die Haftreibung zwischen dem Dichtungskunststoff und dem Hülsenmetall, für welche zumindest Orientierungswerte für den Haftreibungskoeffizienten $\mu_o$ aus Tabellen entnommen werden können, mit ein.

Bei gleichbleibender Größe der zylindrischen Hülsen ist der gewählte Überlappungsgrad proportional dem Öffnungsdruck. Bei Übergang zu einem größeren Zellendurchmesser muß die Überlappungszone ausgedehnt werden, um dem gleichgebliebenen spezifischen Innendruck die gleiche Schließkraft entgegenzusetzen. Daraus folgt als allgemeine Regel, daß die gegenseitige Überlappung der Zylinder, gemessen als Länge der Überlappungszone, dem Gehäusedurchmesser proportional ist.

Tritt nun in der fertigen Zelle ein unzulässig erhöhter Innendruck auf, spricht sie durch Abschieben des zweiten Zylinders vom ersten auf diesen an. Die Dilatationsbewegung vollzieht sich aufgrund des herrschenden Preßdrucks und der Haftreibung Kunststoff/Metall anfangs zögernd. Der abgleitende Zylinderdeckel gibt jedoch nunmehr ein Ventilloch nach dem anderen frei und ermöglicht es dem überschüssigen Gas, evtl auch einer kleinen Elektrolytmenge, zuerst die Isolierung, dann die Gehäuseumhüllung zu unterwandern und an ihren Enden auszutreten. Setzt sich der Druckaufbau trotzdem fort, schiebt die Deckelhülse weiter auf und öffnet neue Löcher. Hierdurch findet ein Druckausgleich « nach Bedarf » statt. Die Ventillöcher wirken demnach einer sich mehr und mehr beschleunigenden Abschiebung entgegen. Sie bilden quasi einen Bypass für die Permeation. Bevor jedoch im Grenzfall eine Explosion eintreten kann, hat sich die Zelle bei kontrolliertem Druck lediglich durch « Abschießen » der Deckelhülse entspannt. Eine brisante Zerstörung des Gehäuses wird so vermieden.

Erfindungsgemäß wird ein kontrolliertes Öffnen der Zelle in dem dargestellten Sinne auf besonders zweckdienliche Weise erreicht, wenn das Verhältnis Überlappung : Gehäusedurchmesser zwischen 1 :1 und 1 :4 gewählt wird und wenn die Ventillöcher über den Überlappungsbereich in mit der Entfernung von seiner Untergrenze zunehmender Häufigkeit verteilt sind.

Durch die besondere Verschlußanordnung ist festgelegt, bei welchem Druck und an welcher Stelle der Behälter aufgehen soll, ohne daß durch falsche Behandlung (Ladeversuche, unzulässige Erwärmung) ein extrem hoher Überdruck sich ausbilden kann, der zum unkontrollierten Bersten des Behälters führt.

Das Auseinandergleiten der Gehäuseteile muß nicht notwendigerweise bis zur völligen Trennung der beiden Zylinderhülsen führen, denn eine weitgehende Druckentlastung tritt bereits ein, wenn das ursprünglich im Behälter vorhandene kleine Totvolumen nur geringfügig vergrößert wird. Die Abschiebebewegung kommt damit zum Stillstand.

Drei Figurendarstellungen sollen die Erfindung veranschaulichen.

Figur 1 zeigt das Gehäuse eines galvanischen Elements gemäß der Erfindung im Längsschnitt.

Figur 2 zeigt eine alternative Gehäuseform im Längsschnitt.

Figur 3 zeigt das Becherteil des Gehäuses nach Figur 2 von innen.

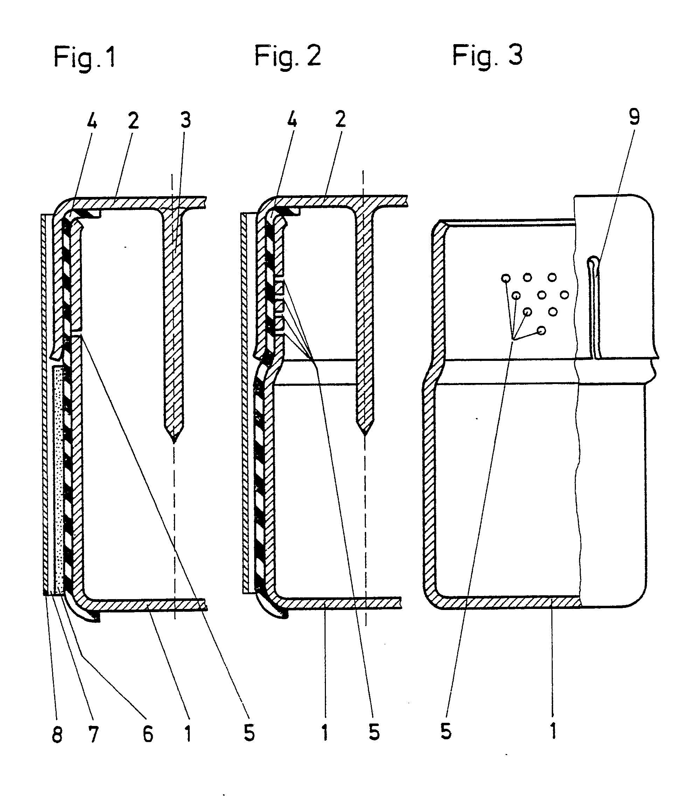

Bei der in Figur 1 wiedergegebenen Gehäuse-Grundform sind ein erster einseitig geschlossener Zylinder 1 als Becher und ein zweiter einseitig geschlossener Zylinder 2 als Deckel mit angepunktetem negativen Ableiter 3 unter Zwischenlage einer elektrischen Isolierung 4 aus Kunststoff im Preßsitz zusammengeschoben, derart, daß der Deckel 2 nur unter der Wirkung eines stark überhöhten Innendrucks vom Becher abschiebbar ist. (Auf eine Darstellung des Innenaufbaues der Zelle mit zentrischer Anordnung des Anodenmaterials wurde verzichtet). In die Wandung des Bechers sind im Bereich der Überlappung durch den Deckel mittels Laser mehrere Ventillöcher 5 von z. B. 0,1 mm Durchmesser gebohrt. Vorzugsweise sollte der Lochdurchmesser jedoch kleiner als die Dicke der abdeckenden Kunststoffisolierung sein. Zumindest ein Ventilloch sollte sich nahe der Untergrenze des Überlappungsbereichs befinden. Gemäß Figur 3 sind die Ventillöcher so verteilt, daß ihre Häufigkeit mit wachsendem Abstand von der unteren Überlappungsgrenze zunimmt.

Figur 1 zeigt weiter eine den Überstand des Deckels ausgleichende Becher-Kaschierung 6, deren Dicke etwa 0,3 mm beträgt. Auf diese folgt als Finishing eine das gesamte Gehäuse ummantelnde Kunststoffolie 7 und eine Metallfolie 8 als Träger für die Etikettierung. Die Metallfolie ist vorzugsweise eine Aluminiumfolie von ca. 0,05 mm Stärke, während die Stärke der Kunststoffolie etwa bei 0,1 mm liegt. Anstelle getrennter Folien 7 und 8 ist auch eine kunststoffkaschierte Metallfolie, im einfachsten Fall sogar eine Metallfolie für sich allein verwendbar.

Der Vorteil der Kunststoffolie liegt jedoch in einer über die eigentliche Dichtstrecke (Überlappungszone) hinausgehenden Verlängerung des Kriechweges und einer verringerten Permeation.

Als Material für die elektrische Isolierung 4 kommen die üblichen Dichtungskunststoffe wie Polypropylen, Polyäthylen- Polypropylen-Copolymerisate, Polyamid, Nylon, aber auch Gummi oder fluorierte Kohlenwasserstoffpolymere, darunter Polytetrafluoräthylen, infrage. Die Außenseite des ersten Zylinders (Becher) oder die Innenseite des zweiten Zylinders (Deckel) sind dann mit einer entsprechenden Kunststoffbeschichtung versehen.

Alternativ zu einer Beschichtung bietet sich jedoch als vorteilhaft auch, z. B. in Figur 2, als Isolierung 4 die Verwendung eines Schrumpfschlauches an, und der überlappte Teil des Bechers kann, z. B. durch Einrollen mit einem kugelkranz, in seinem Durchmesser leicht reduziert sein, um eine mit dem Deckel fluchtende Mantelfläche zu erzielen. In diesem Fall sollte jedoch zweckmäßig das Kathodenmaterial vorher in den Becher eingebaut worden sein. Die totale Ummantelung des Bechers durch den Schrumpfschlauch schützt diesen vor einer metallischen Berührung mit anderen Zellen, wodurch Kurzschlüsse ausgelöst werden können.

Als weitere Möglichkeit einer Isolierung bietet sich erfindungsgemäß eine offene Kunststoffkappe in Form eines Spritzteiles an, welche dem ersten Zylinder an seinem offenen Ende aufsitzt und seine Außenseite wenigstens so weit umgreift, daß die spätere Überlappungszone abgedeckt ist.

Versieht man den Mantel des zweiten Zylinders mit einer oder mehreren Ausnehmungen 9, kann eine Gehäusedilatation sogar ganz unterbleiben. Die Ausnehmungen können beliebig geformt, im einfachsten Fall schlitzartig sein und vorzugsweise parallel zur Zylinderachse verlaufen. Diese Variation verändert die Elasitzitätseigenschaften des Deckels und befähigt ihn bei herrschendem Überdruck in der Zelle zu einer vorübergehenden geringfügigen Umfangsdehnung, so daß auch die Flächenpressung der Kunststoffdichtung etwas nachgibt und ein Abblasen des Druckes gestattet. Die erfindungsgemäße Dichtungsanordnung in dieser Ausführungsform arbeitet demnach wie ein wiederschließendes Ventil.

Der Öffnungsmechanismus der erfindungsgemäßen Zelle tritt schließlich auch bei einer übermäßigen Temperaturerhöhung in Funktion, nämlich dann, wenn das Dichtungsmaterial unter dem Gesichtspunkt seines thermischen Verhaltens so ausgewählt ist, daß es bei einer vorgegebenen Temperatur, z. B. der Siedetemperatur des verwendeten Flüssigelektrolyten, erweicht. In diesem Fall schieben die Hülsen wegen des Verlustes der Haftreibung bereits bei geringem Innendruck voneinander ab, während die gleiche Zelle bei Raumtemperatur einem wesentliche höheren Gasdruck, beispielsweise bis zu 30 bar, widerstehen würde. Ein und dieselbe Zelle ist somit imstande, auf voneinander unabhängige Höchstwerte des Innendrucks und der Temperatur anzusprechen und zu öffnen.

## Patentansprüche

1. Galvanisches Element mit einem dicht verschlossenen zylindrischen Metallgehäuse, welches gegen die Gefahr einer Explosion abgesichert ist, bestehend aus einem ersten einseitig geschlossenen Zylinder (1) und einem zweiten einseitig geschlossenen Zylinder (2), welche mit einer Überlappung des ersten Zylinders durch den zweiten und unter Zwischenlage einer elektrischen Isolierung aus Kunststoff derart ineinandergeschoben sind, daß sie nur durch einen hohen Innendruck voneinander abschiebbar sind, wobei die Wandung des ersten Zylinders im Überlappungsbereich mehrere Ventillöcher (5) aufweist, dadurch gekennzeichnet, daß das Verhältnis der Länge der Überlappungszone zum Gehäusedurchmesser zwischen 1 :1 und 1 :4 liegt und daß die Ventillöcher über den Überlappungsbereich in mit der Entfernung von seiner Untergrenze zunehmender Häufigkeit verteilt sind.

2. Galvanisches Element nach Anspruch 1, dadurch gekennzeichnet, daß die isolierende Zwischenlage (4) ein den ersten Zylinder ummantelnder Schrumpfschlauch ist.

3. Galvanisches Element nach Anspruch 1, dadurch gekennzeichnet, daß die isolierende Zwischenlage (4) aus einer Kunststoffbeschichtung entweder der Außenseite des ersten Zylinders oder der Innenseite des zweiten Zylinders besteht.

4. Galvanisches Element nach Anspruch 1, dadurch gekennzeichnet, daß die isolierende Zwischenlage (4) von einer das offene Ende des ersten Zylinders übergreifenden und mindestens den Überlappungsbereich seiner Außenseite ummantelnden offenen Kunststoffkappe gebildet ist.

5. Galvanisches Element nach einem der Ansprüche 1 bis 4, dadurch gekennzeichnet, daß das zylindrische Gehäuse von einer kunststoffkaschierten Metallfolie (7, 8) ummantelt ist.

6. Galvanisches Element nach einem der Ansprüche 1 bis 5, dadurch gekennzeichnet, daß der Mantel des äußeren Zylinders mindestens eine Ausnehmung (9) besitzt.

## Claims

1. Galvanic cell with a hermetically sealed cylindrical metal housing which is protected against the danger of an explosion, consisting of a first cylinder (1) closed at one end and a second cylinder (2) closed at one end which are pushed into each other with the first cylinder being overlapped by the second cylinder and with the insertion of an electrical plastic insulation in a manner such that they can be pushed apart only by a high internal pressure, the wall of the first cylinder having several vent holes (5) in the overlap region, characterized in that the ratio of the length of the overlap zone to the housing diameter is between 1 :1 and 1 :4, and that the vent holes are distributed over the overlap region at a frequency which increases with the distance from its lower boundary.

2. Galvanic cell according to Claim 1, characterized in that the insulating insertion (4) is a shrink-on sleeve which encases the first cylinder.

3. Galvanic cell according to Claim 1, characterized in that the insulating insertion (4) consists of a plastic coating either of the outside of the first cylinder or of the inside of the second cylinder.

4. Galvanic cell according to Claim 1, characterized in that the insulating insertion (4) is formed from an open plastic cap which stretches across the open end of the first cylinder and encases at least the overlap region on its outside.

5. Galvanic cell according to one of Claims 1 to 4, characterized in that the cylindrical housing is encased by a plastic-clad metal foil (7, 8).

6. Galvanic cell according to one of Claims 1 to 5, characterized in that the outside surface of the outer cylinder has at least one cutout (9).

## Revendications

1. Elément galvanique avec un boîtier métallique cylindrique fermé de façon étanche, qui est protégé contre le risque d'une explosion, et qui est constitué d'un premier cylindre (1) fermé d'un côté et d'un deuxième cylindre (2) fermé d'un côté, qui sont emboîtés l'un dans l'autre avec un recouvrement du premier cylindre par le second et avec interposition d'une isolation électrique en matière plastique, de façon qu'ils ne puissent être séparés l'un de l'autre que par une pression interne élevée, la paroi du premier cylindre comportant dans la zone de recouvrement plusieurs trous de ventilation (5), élément galvanique caractérisé en ce que le rapport de la longueur de la zone de recouvrement par rapport au diamètre du boîtier se situe entre 1 : 1 et 1 : 4, et que les trous de ventilation sont répartis sur la zone de recouvrement avec une fréquence qui croît avec la distance à partir de sa limite inférieure.

2. Elément galvanique selon la revendication 1, caractérisé en ce que la couche intermédiaire isolante (4) est une gaine rétractable enveloppant le premier cylindre.

3. Elément galvanique selon la revendication 1, caractérisé en ce que la couche intermédiaire isolante (4) est constituée par un revêtement en matière plastique, soit de la face externe du premier cylindre, soit de la face interne du deuxième cylindre.

4. Elément galvanique selon la revendication 1, caractérisé en ce que la couche intermédiaire isolante (4) est constituée par un capot ouvert en matière plastique venant en prise par-dessus l'extrémité ouverte du premier cylindre et enveloppant au moins la zone de recouvrement de sa face externe.

5. Elément galvanique selon une des revendications 1 à 4, caractérisé en ce que le boîtier cylindrique est enveloppé par une feuille métallique (7, 8) doublée de matière plastique.

6. Elément galvanique selon une des revendications 1 à 5, caractérisé en ce que l'enveloppe du cylindre externe comporte au moins un évidement (9).

Fig.1

Fig. 2

Fig. 3